# EUROPÄISCHE PATENTSCHRIFT

(11) **EP 1 566 243 B1**
(45) Veröffentlichungstag und Bekanntmachung des Hinweises auf die Patenterteilung: **18.07.2007**
(21) Anmeldenummer: 04003659.2
(22) Anmeldetag: 18.02.2004
(51) Int. Cl.: B25J 9/02, B25J 9/10

(54) **Vorrichtung zum Positionieren und Antreiben eines Arbeitswerkzeuges**
Device for positioning and driving a worktool
Dispositif pour le positionnement et l'entraînement d'un outil de travail

(43) Veröffentlichungstag der Anmeldung: 24.08.2005
(73) Patentinhaber: BIG DRUM GmbH, 34281 Gudensberg (DE)
(72) Erfinder: Wagener, Reinhold, 34549 Edertal-Böhne (DE)
(74) Vertreter: Müller, Gerald Christian

(56) Entgegenhaltungen:
- DE-A- 4 444 523
- DE-A- 10 017 293
- FR-A- 2 592 828

## Beschreibung

### I. Anwendungsgebiet

Die Erfindung betrifft eine Vorrichtung zum Positionieren und Antreiben eines Arbeitswerkzeuges sowie ein Verfahren zum Positionieren und Antreiben eines Arbeitswerkzeuges unter Verwendung einer erfindungsgemäßen Vorrichtung. Insbesondere betrifft die vorliegende Erfindung einen Antrieb zum zweidimensionalen/dreidimensionalen Positionieren und Antreiben eines Arbeitswerkzeugs in einem Portal.

### II. Technischer Hintergrund

In verschiedensten Anwendungsbereichen ist es nötig, zum Verrichten einer-Arbeit das betreffende Arbeitswerkzeug zunächst zu positionieren und dann anzutreiben. Ein Beispiel hierfür bietet ein Portalantrieb, bei dem ein an einem hinsichtlich des Portals beweglichen Schlitten befestigtes Arbeitswerkzeug zunächst durch Verfahren des Schlittens an seine Bestimmungsposition gebracht wird und dann in dieser Stellung die gewünschte Arbeit verrichtet. Hierbei kann es sich um einen Bohrvorgang, eine Greifbewegung, eine Schwenkbewegung, eine Pendelbewegung öder Ähnliches handeln, die von dem Arbeitswerkzeug durchgeführt wird. Gegebenenfalls kann hierbei unter Verwendung eines zweiten beweglichen Schlittens auch eine Positionierung des Arbeitswerkzeugs in zwei unterschiedlichen Richtungen durchgeführt werden.

Bei den bekannten Portalantrieben, siehe z.B. DE-A-100 17 293, wird hierbei üblicherweise eine durch wenigstens einen Motor vermittelte Rotationsbewegung mit Hilfe eines Zugelements, beispielsweise in Form eines Zahnriemens oder einer Kette, in eine zur Positionierung des Arbeitswerkzeugs benötigte lineare Bewegung des das Arbeitswerkzeug tragenden Schlittens umgewandelt. Hierbei ist das Zugelement, das mit seinen beiden Enden an dem Schlitten des Portalantriebs befestigt wird, durch Umlenkung über eine Umlenk- und eine Antriebsrolle zu einem funktionsfähigen Zugelementetrieb verbunden. Auf diese Weise kann eine Positionierung des Arbeitswerkzeugs durch den wenigstens einen Motor erreicht werden. Allerdings wird das Arbeitswerkzeug bei dieser bekannten Variante üblicherweise mit Hilfe eines auf dem Schlitten angeordneten, zusätzlichen Motors angesteuert. Dadurch wird jedoch die beim Positionieren des Arbeitswerkzeugs zu bewegende Masse'des Schlittens erhöht, was aufgrund der Trägheit der zusätzlichen Masse entsprechend zu langen Taktzeiten sowie erhöhten Beschleunigungs- bzw. Verzögerungskräften führt.

Aus der DE-A-4 444 523 ist bekannt, ein auf einem linear bewegten Schlitten angeordnetes Arbeitswerkzeug durch einen ortsfesten Motor mittels eines zusätzlichen Zugelements anzusteuern.

### III. Darstellung der Erfindung

### a) Technische Aufgabe

Es ist daher die Aufgabe der vorliegenden Erfindung, eine Vorrichtung zum Positionieren und Antreiben eines Arbeitswerkzeuges zu schaffen, bei der die Masse des das Arbeitswerkzeug tragenden Schlittens sowie die Anzahl der erforderlichen Zugelemente so gering wie möglich gehalten wird. Gleichzeitig soll gewährleistet sein, dass der Schlitten bei einem Betrieb des Arbeitswerkzeugs in einer vorgewählten Position des Schlittens eine ortsfeste, stabile Position einhält.

### b) Lösung der Aufgabe

Diese Aufgabe wird durch eine Vorrichtung mit den Merkmalen des Anspruches 1 gelöst. Vorteilhafte Ausführungsformen ergeben sich aus den Unteransprüchen.

Demzufolge umfasst die erfindungsgemäße Vorrichtung zum Positionieren und Antreiben eines Arbeitswerkzeuges zunächst ein bewegliches oder unbewegliches Gestell sowie einen an dem Gestell in einer ersten Richtung beweglich angeordneten ersten Schlitten. Das anzutreibende Arbeitswerkzeug ist hierbei an dem Schlitten angeordnet. Erfindungsgemäß sind an dem Gestell zwei Motoren angebracht, die durch ein endlos umlaufendes Antriebselement mit dem Arbeitswerkzeug und dem ersten Schlitten gekoppelt sind. Die Kopplung erfolgt hierbei derart, dass das Antriebselement ausschließlich abhängig von den Antriebszuständen der jeweiligen Motoren das Arbeitswerkzeug entweder durch Verschieben des ersten Schlittens in der ersten Richtung positioniert oder in einer eingestellten Position bei feststehendem ersten Schlitten antreibt.

Durch die Doppelfunktion des Antriebselements sowohl zum, Positionieren des Schlittens als auch zum Antreiben des Arbeitswerkzeugs kann erfindungsgemäß auf den aus dem Stand der Technik bekannten, auf dem ersten Schlitten angeordneten Motor verzichtet werden. Auf diese Weise kann folglich die beim Positionieren des Schlittens zu bewegende Masse verringert werden, was zu niedrigeren Beschleunigungs- bzw. Verzögerungskräften und somit zu einem geringeren Verschleiß führt. Gleichzeitig können kürzere Taktzeiten verwirklicht werden.

Bei dem Antriebselement kann es sich um ein beliebiges endlos umlaufendes Element handeln, das mit entsprechenden Schnittstellen, beispielsweise Antriebsräder, Antriebsrollen, Umlenkräder, Umlenkrollen, Führungsrollen oder ähnliches, an Motoren und anzutreibende Bauteile ankoppelbar ist. Vorzugsweise erfolgt die Ankopplung hierbei unter Verwendung eines Formschlusses, wie beispielsweise durch eine Antriebskette oder einen Zahnriemen in Verbindung mit entsprechenden Zahnrädern, gezahnten Umlenkrädern oder Antriebsritzeln. Allerdings ist auch ein reiner Kraftschluss zur Kopplung des Antriebselements mit den Motoren und anzutreibenden Bauteilen, wie beispielsweise durch einen Flachriemen oder ein sonstiges flaches Band in Verbindung mit entsprechenden Lauf-, Antriebs- und Umlenkrollen bzw. -rädern, denkbar.

Das Antriebselement greift hierbei vorzugsweise an wenigstens einer/einem Umlenkrolle/Umlenkrad an dem ersten Schlitten an, wobei das Antriebselement in einer bevorzugten Ausführungsform an genau zwei Umlenkrollen/Umlenkrädern an dem ersten Schlitten angreift, die in der ersten Richtung beabstandet auf letzterem angeordnet sind.

Das anzutreibende Arbeitswerkzeug ist hierbei vorzugsweise über eine Getriebevorrichtung mit wenigstens einer/einem dieser Umlenkrollen/Umlenkrädern verbunden. Bei dieser Getriebevorrichtung kann es sich auch um eine Hebelmechanik oder eine Spindel- bzw. Riemen-getriebene Linearachse handeln, wobei die Linearachse vorzugsweise senkrecht zur ersten Richtung steht.

Die Ankopplung des Arbeitswerkzeugs an diese/dieses wenigstens eine Umlenkrolle/Umlenkrad kann auf beliebige Weise erfolgen, solange die durch das Antriebselement auf die/das Umlenkrolle/Umlenkrad vermittelte Kraft zum bestimmungsgemäßen Antrieb des Arbeitswerkzeugs verwendet werden kann. Hierbei kann beispielsweise durch eine einfache Zahnradkopplung ein rotativer Antrieb des Arbeitswerkzeugs in der Rotationsebene der/des Umlenkrolle/Umlenkrads erreicht werden. Ein Kegelgetriebe ermöglicht beispielsweise einen rotativen Antrieb des Arbeitswerkzeugs in einer anderen Rotationsebene als derjenigen der/des Umlenkrolle/Umlenkrads. Auch Getriebeanordnungen zur Umwandlung der Rotation der/des Umlenkrolle/Umlenkrads in lineare und/oder oszillierende Bewegungen sind denkbar. Selbstverständlich können auch beide der vorzugsweise auf dem Schlitten vorhandenen Umlenkrollen/Umlenkräder zu einer besseren Kraftübertragung an das Arbeitswerkzeug angekoppelt sein.

Um eine symmetrische Verteilung der bei der linearen Bewegung des Schlittens angreifenden Kräfte zu erreichen und um auf die Führung des Schlittens wirkende Scherkräfte zu vermeiden, sind die beiden Motoren vorzugsweise bezüglich der Bewegungsrichtung des ersten Schlittens auf verschiedenen Seiten desselben angeordnet. In einer bevorzugten Ausführungsform wird das Antriebselement über entsprechende Umlenkelemente, beispielsweise in Form von drehbaren Umlenkrollen/Umlenkrädern oder nicht drehbaren Umlenkstiften, um die Antriebsrollen/Antriebsräder der Motoren und um die an dem Schlitten angeordneten Umlenkrollen/Umlenkräder geführt.

Erfindungsgemäß werden zum Einstellen der Position des Arbeitswerkzeuges in der ersten Richtung die beiden Motoren so betrieben, dass sie das Antriebselement jeweils in gegenläufiger Umlaufrichtung, vorzugsweise mit gleicher Geschwindigkeit, antreiben. Hierdurch wird der auf der einen Seite bezüglich der beiden Motoren liegende Teil des Antriebselements nach und nach auf die andere Seite bezüglich der Motoren bewegt. Da das Antriebselement über die/das wenigstens eine Umlenkrolle/Umlenkrad an dem Schlitten angreift und dieser bezüglich des Gestells, an dem die Motoren angeordnet sind, beweglich ist, führt das Antreiben der Motoren in gegenläufiger Umlaufrichtung zu einer Bewegung des Schlittens, bei der der Schlitten an seinem in Bewegungsrichtung hinteren Ende von dem Antriebselement gedrückt bzw. geschoben wird.

Auch hier ist die vorzugsweise Anordnung der Motoren auf in Bewegungsrichtung des Schlittens gesehen beiden Seiten desselben von Vorteil, da auf diese Weise erreicht werden kann, dass die/das auf dem Schlitten angeordnete Umlenkrolle/Umlenkrad und somit das Arbeitswerkzeug beim Positionieren des Schlittens von dem Antriebselement nicht angetrieben wird, falls das Antreiben der beiden Motoren mit gleicher Geschwindigkeit erfolgt und die Antriebsrollen/Antriebsräder der Motoren gleichen Durchmesser aufweisen.

Sollte jedoch ein Antreiben des Arbeitswerkzeugs beim Positionieren des Schlittens erwünscht sein, so kann dies durch ein Antreiben der Motoren mit unterschiedlicher Geschwindigkeit oder durch unterschiedliche Durchmesser der Antriebsrollen/Antriebsräder der Motoren erreicht werden. Gegebenenfalls wäre es auch denkbar, beim Positionieren des Schlittens nur einen Motor zu betreiben, während der andere Motor blockiert gehalten wird.

Zum Betrieb des Arbeitswerkzeugs in einer vorgewählten Position des Schlittens werden die beiden Motoren dann so betrieben, dass beide Motoren das Antriebselement mit gleicher Geschwindigkeit in der gleichen Umlaufrichtung antreiben.

Dies führt dazu, dass das Antriebselement gleichmäßig umläuft und dabei die/das wenigstens eine auf dem Schlitten angeordnete Umlenkrolle/Umlenkrad rotativ antreibt, was wiederum mittelbar oder unmittelbar zu einem Antreiben des Arbeitswerkzeugs führt.

In der bevorzugten Anordnung der Motoren auf in Bewegungsrichtung des Schlittens gesehen beiden Seiten desselben und einem Angreifen des Antriebselements an zwei auf dem Schlitten in Bewegungsrichtung beabstandeten Umlenkrollen/Umlenkräder kann erreicht werden, dass der Schlitten beim Antreiben des Arbeitswerkzeugs eine ortsfeste stabile Position einnimmt, da bei dem gleichmäßigen Umlaufen kein Transport von Abschnitten des Antriebselements von einer Seite bezüglich der Motoren auf die andere Seite erfolgen kann.

Bei einer bevorzugten Ausführungsform zur zwei-/dreidimensionalen Positionierung des Arbeitswerkzeugs ist der das Arbeitswerkzeug tragende Schlitten nicht direkt an dem Gestell angeordnet, sondern vielmehr mittelbar über einen zweiten Schlitten. Dieser zweite Schlitten ist in einer zweiten Richtung beweglich an dem Gestell angeordnet, wobei vorzugsweise die erste und die zweite Richtung zueinander senkrecht stehen. Um eine ggf. erwünschte Positionierung des Arbeitswerkzeugs innerhalb einer Ebene zu erreichen, ist es jedoch ausreichend, dass die beiden Richtungen zumindest nicht parallel zueinander verlaufen.

Erfindungsgemäß ist zusätzlich zu den beiden an dem Gestell angeordneten Motoren an dem zweiten Schlitten ein dritter Motor angeordnet, der so mit dem Antriebselement und den an dem Gestell angeordneten Motoren gekoppelt ist, dass das Antriebselement ausschließlich abhängig von den Antriebszuständen der jeweiligen Motoren das Arbeitswerkzeug entweder durch Verschieben des ersten und/oder zweiten Schlittens in der ersten und/oder zweiten Richtung positioniert oder in einer eingestellten Position bei feststehendem ersten und zweiten Schlitten antreibt.

Hierbei kann das Antriebselement zwischen dem auf dem zweiten Schlitten angeordneten Motor und einem der beiden an dem Gestell angeordneten Motoren über eine oder mehrere Umlenkrollen/Umlenkräder geführt sein, die wiederum an dem Gestell oder an dem zweiten Schlitten angeordnet sein können.

Erfindungsgemäß werden zum Einstellen der Position des Arbeitswerkzeuges in der ersten Richtung die beiden an dem Gestell befindlichen Motoren so betrieben, dass sie das Antriebselement jeweils in gegenläufiger Umlaufrichtung mit gleicher Geschwindigkeit antreiben. Der dritte Motor läuft hierbei, je nach seiner Anordnung bezüglich des ersten Schlittens und der beiden am Gestell befindlichen Motoren, von seinem Drehsinn und seiner Geschwindigkeit her vorzugsweise so, dass er der von den beiden am Gestell angebrachten Motoren verursachten Bewegung des Antriebselements nicht entgegenwirkt, ohne dass er hierbei notwendigerweise selber Kraft auf das Antriebselement ausüben muss. Auf diese Weise kann in vorteilhafter Weise erreicht werden, dass der zweite Schlitten während der Bewegung des ersten Schlittens bezüglich des Gestells ortsfest verbleibt, d.h. in einer stabilen Position verharrt, ohne dass es hierfür einer gesonderten lösbaren Befestigungsvorrichtung zum Befestigen des zweiten Schlittens an dem Gestell bedarf. Die Bewegung des ersten Schlittens ergibt sich dann analog zu der oben dargestellten Ausführungsform bei direkter Befestigung des ersten Schlittens an dem Gestell.

Zum Einstellen der Position des Arbeitswerkzeuges in der zweiten Richtung werden die beiden an dem Gestell befindlichen Motoren so betrieben, dass sie das Antriebselement in gleichläufiger Umlaufrichtung mit gleicher Geschwindigkeit antreiben. Der dritte Motor wird hierbei blockiert. Auf diese Weise übt das durch die ersten beiden Motoren angetriebene Antriebselement eine Zugkraft auf den zweiten Schlitten in der zweiten Richtung aus, wodurch dieser positioniert werden kann.

Auch ist es denkbar, eine Positionierung des Arbeitswerkzeugs in beiden Richtungen gleichzeitig erfolgen zu lassen. Hierzu werden wieder die beiden an dem Gestell befindlichen Motoren so betrieben, dass sie das Antriebselement jeweils in gegenläufiger oder auch gleichläufiger Umlaufrichtung, nun allerdings mit unterschiedlichen Geschwindigkeiten, antreiben. Der dritte Motor treibt hierbei das Antriebselement in einer Umlaufrichtung an, die gegenüber der des an dem Gestell angeordneten Motors entgegengesetzt oder auch gleich ist, mit dem der dritte Motor durch das Antriebselement über die/das wenigstens eine, dem Arbeitswerkzeug zugeordnete Umlenkrolle/Umlenkrad an dem ersten Schlitten gekoppelt ist. Vorzugsweise treiben diese beiden Motoren das Antriebselement mit gleicher resultierender Geschwindigkeit bezogen auf den ersten Schlitten an (die Geschwindigkeit des Antriebselements am betreffenden Gestellmotor ist um den Betrag der Geschwindigkeit des zweiten Schlittens größer oder kleiner als die Geschwindigkeit des Antriebselements am dritten Motor), so dass die/das an dem Schlitten angeordnete, an das Arbeitswerkzeug gekoppelte Umlenkrolle/Umlenkrad sich nicht dreht. Es wäre jedoch auch denkbar, dass eine Bewegung der/des an dem ersten Schlitten angeordneten Umlenkrolle/Umlenkrads und somit des Arbeitswerkzeugs während des Positionierens erfolgen soll. In diesem Fäll müssten der dritte Motor und derjenige der beiden an dem Gestell angeordneten Motoren, mit dem der dritte Motor durch das Antriebselement über die/das wenigstens eine Umlenkrolle/Umlenkrad an dem ersten Schlitten gekoppelt ist, das Antriebselement in entgegengesetzter oder auch gleicher Richtung mit verschiedener, resultierender Geschwindigkeit bezogen auf den ersten Schlitten antreiben.

Zum Betrieb des Arbeitswerkzeugs in einer vorgewählten Position der beiden Schlitten werden die drei Motoren so betrieben, dass alle Motoren das Antriebselement mit gleicher Geschwindigkeit in der gleichen Umlaufrichtung antreiben. Dies führt dazu, dass das Antriebselement gleichmäßig umläuft und dabei die/das wenigstens eine auf dem ersten Schlitten angeordnete Umlenkrolle/Umlenkrad rotativ antreibt, was wiederum mittelbar oder unmittelbar zu einem Antreiben des Arbeitswerkzeugs führt. Auch hier wird durch das Mitlaufen des dritten, auf dem zweiten Schlitten angeordneten Motors in vorteilhafter Weise erreicht, dass der zweite Schlitten während des Antreibens des Arbeitswerkzeugs bezüglich des Gestells ortsfest verbleibt bzw. in einer stabilen Position verharrt, ohne dass es hierfür einer gesonderten lösbaren Befestigungsvorrichtung zum Befestigen des zweiten Schlittens an dem Gestell bedarf.

Bei der bevorzugten Anordnung der beiden an dem Gestell angeordneten Motoren auf in Bewegungsrichtung des ersten Schlittens gesehen beiden Seiten desselben und einem Angreifen des Antriebselements an zwei auf dem ersten Schlitten in dessen Bewegungsrichtung beabstandeten Umlenkrollen/Umlenkräder kann in vorteilhafter Weise erreicht werden, dass auch der erste Schlitten sowohl beim Antreiben des Arbeitswerkzeugs als auch beim Bewegen des zweiten Schlittens eine ortsfeste stabile Position bezüglich des zweiten Schlittens einnimmt.

Gemäß einer besonders bevorzugten Ausführungsform der Erfindung handelt es sich bei dem Gestell um ein Portal, wobei der zweite Schlitten beweglich an einem horizontalen Querträger des Portals angeordnet ist.

### c) Ausführungsbeispiele

Bevorzugte Ausführungsformen gemäß der Erfindung sind im Folgenden anhand der Figuren beispielhaft näher beschrieben. Es zeigen:
- Fig. 1:: eine Seitenansicht einer ersten Ausführungsform der Erfindung beim Positionieren des Arbeitswerkzeugs;
- Fig. 2:: eine Seitenansicht der Ausführungsform aus Fig. 1 beim Antreiben des Arbeitswerkzeugs;
- Fig. 3:: eine Aufsicht auf die Ausführungsform aus Fig. 2 in Richtung A-A;
- Fig. 4:: eine Seitenansicht einer zweiten Ausführungsform in Form eines Portalantriebs der Erfindung beim Positionieren des Arbeitswerkzeugs in zwei Dimensionen und
- Fig. 5:: eine Seitenansicht der Ausführungsform aus Fig. 4 beim Antreiben des Arbeitswerkzeugs in der dritten Dimension.

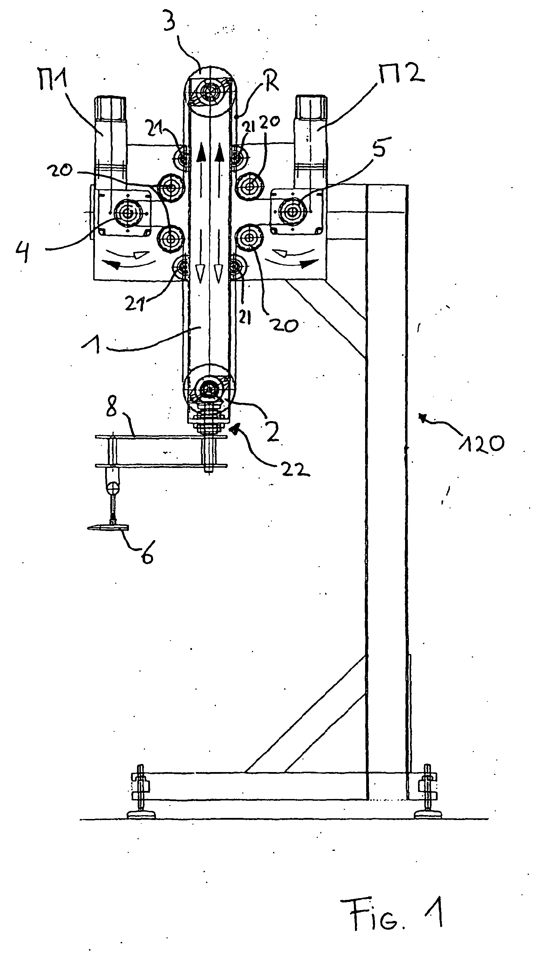

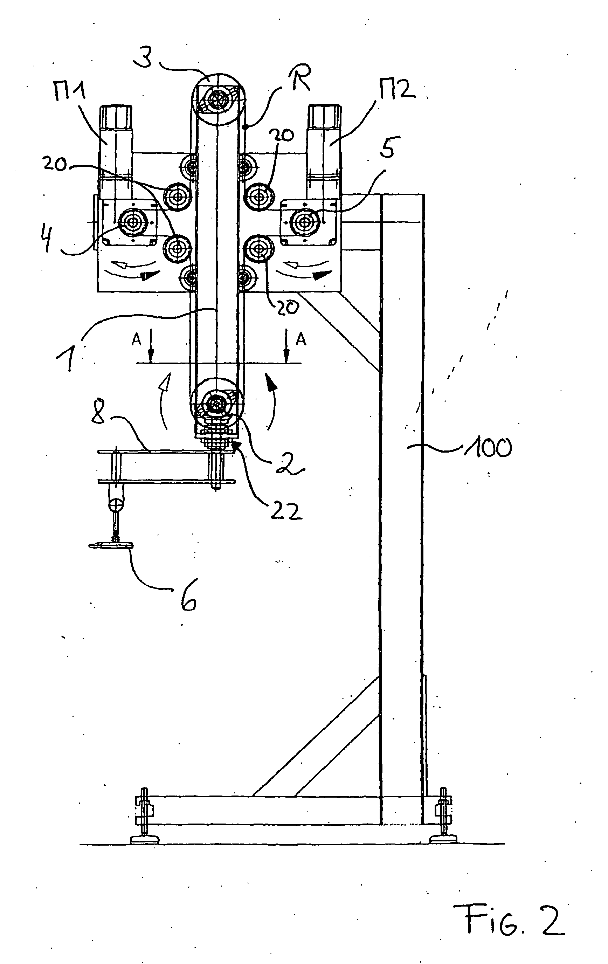

Die Figuren 1 und 2 zeigen eine erste Ausführungsform der erfindungsgemäßen Vorrichtung zum Positionieren und Antreiben eines Arbeitswerkzeugs 6. Bei dem Arbeitswerkzeug 6 kann es sich beispielsweise um Handhabungswerkzeuge zum Handhaben von Eiswaffeltüten beim Befüllen derselben mit Speiseeis handeln. Die Vorrichtung umfasst bei dieser Ausführungsform ein unbewegliches Gestell 120, an dem ein erster Schlitten 1 in Form einer Hubsäule in vertikaler Richtung beweglich angeordnet ist.

An der Hubsäule 1 sind zwei voneinander vertikal beabstandete Umlenkräder 2,3 angeordnet, von denen das am unteren Ende der Hubsäule 1 angeordnete Umlenkrad 2 über eine Getriebevorrichtung 22 und einen Arm 8 mit dem Arbeitswerkzeug 6 gekoppelt bzw. antriebsverbunden ist. Im vorliegenden Fall handelt es sich bei der Getriebevorrichtung 22 im Wesentlichen um ein Kegelzahnradgetriebe, so dass eine in der Zeichenebene liegende Drehbewegung des Umlenkrades 2 in eine Drehbewegung des Arms 8 und somit des Arbeitswerkzeugs 6 senkrecht zur Zeichenebene umgewandelt wird.

Die Hubsäule 1 wird durch vier an dem Gestell 120 angebrachte Lagerrollen 21 in der vertikalen Richtung geführt, so dass eine geführte Bewegung der Hubsäule 1 nach oben in Richtung der Pfeile mit dem schwarzen Pfeilkopf sowie eine Bewegung nach unten in Richtung der Pfeile mit dem weißen Pfeilkopf möglich ist.

Weiterhin sind an dem Gestell symmetrisch hinsichtlich der Bewegungsrichtung der Hubsäule 1 zwei Motoren M1,M2 angebracht, die jeweils über entsprechende Antriebsräder 4 bzw. 5 verfügen. Um die auf der Hubsäule 1 angeordnete Umlenkräder 2,3 sowie die Antriebsräder 4,5 der beiden Motoren M1,M2 herum verläuft ein endlos umlaufendes Antriebselement R, im vorliegenden Ausführungsbeispiel in Form eines Zahnriemens. Zum Umlenken des Antriebselements R sind weiterhin vier an dem Gestell 120 angeordnete Umlenkräder 20 vorgesehen. Bei den Umlenkrädern 2,3 beziehungsweise den Antriebsrädern 4,5 der beiden Motoren M1,M2 handelt es sich im vorliegenden Fall um Zahnriemenscheiben, die mit dem Antriebselement R in einem formschlüssigen Eingriff stehen.

Wie in den Fig. 1 und 2 zu erkennen ist, beträgt der Umschlingungswinkel bei den Umlenkrädern 2,3 sowie den Antriebsrädern 4,5 180°, während er sich bei den vier Umlenkrädern 20 auf 90° beläuft. Jeweils zwei Umlenkräder 20 sind auf einer Seite der Hubsäule 1 derart angeordnet, dass sich zwischen ihnen eine Schlaufe des Antriebselements R ergibt, die den Umschlingungswinkel von 180° an dem Antriebsrad 4 bzw. 5 gewährleistet. Dasselbe gilt jeweils für die beiden in den Fig. 1 und 2 oberen bzw. unteren Umlenkräder 20. Sie sind derart angeordnet, dass sich jeweils eine Schlaufe des Antriebselements R ergibt, die den Umschlingungswinkel von 180° an den Umlenkrädern 3 bzw. 2 gewährleistet. Mit anderen Worten bedeutet dies, dass der Abstand der Außendurchmesser der in den Fig. 1 und 2 rechten bzw. linken Umlenkräder 20 im Wesentlichen gleich dem Durchmesser des Antriebsrads 5 bzw. 4 ist und dass der Abstand der Außendurchmesser der in den Fig. 1 und 2 oberen und unteren Umlenkräder 20 im Wesentlichen gleich dem Durchmesser des Umlenkrads 3 bzw. 2 ist.

Die symmetrische Anordnung der Umlenkräder 20 auf dem Gestell 120 ermöglicht ein Positionieren der Hubsäule 1 durch das Antriebselement R, ohne dass hierbei seitliche Scherkräfte auftreten.

In Verbindung mit Figur 1 wird nun die Bewegung der Hubsäule 1 in vertikaler Richtung und somit das Positionieren des Arbeitswerkzeugs 6 detaillierter beschrieben. Soll die Hubsäule 1 in der durch die Pfeile mit weißem Pfeilkopf bezeichneten Richtung nach unten bewegt werden, so werden die beiden Motoren M1,M2 so angetrieben, dass sie die jeweils zugehörigen Antriebsräder 4 bzw. 5 in dem mit den Pfeilen mit weißem Kopf bezeichneten Drehsinn mit gleicher Geschwindigkeit antreiben. Im vorliegenden Fall heißt das, dass der in Figur 1 rechte Motor M2 das Antriebsrad 5 im Uhrzeigersinn antreibt, während der in Figur 1 linke Motor M1 das Antriebsrad 4 im Gegenuhrzeigersinn antreibt. Auf diese Weise befördern die beiden Antriebsräder 4,5 das Antriebselement R von der bezüglich der Antriebsräder 4,5 gesehenen oberen Seite auf die bezüglich der Antriebsräder 4,5 gesehen untere Seite, wodurch die mit dem Antriebselement R über die Umlenkräder 2,3 in Wirkverbindung stehende Hubsäule 1 abgesenkt wird. Da bei einer gleichen Geschwindigkeit der Antriebsräder 4,5 auf beiden Seiten der Hubsäule die gleiche Länge an Antriebselement R nach unten befördert wird, wird das Umlenkrad 2 am unteren Ende der Hubsäule 1 bei diesem Vorgang durch das Antriebselement R nicht angetrieben, sondern verbleibt in einer stabilen Position. Dementsprechend bewegt sich auch der mit dem Umlenkrad 2 über die Getriebevorrichtung 22 verbundene Arm 8 und das daran befindliche Arbeitswerkzeug 6 während des Bewegungsvorgangs der Hubsäule 1 nicht.

Sollte eine begrenzte Bewegung des Arbeitswerkzeugs 6 während der Bewegung der Hubsäule 1 erwünscht sein, so könnte dies jedoch auf einfache Weise erreicht werden, indem die beiden Motoren das Antriebselement R über die entsprechenden Antriebsräder 4,5 mit unterschiedlicher Geschwindigkeit antreiben. Um in diesem Fall die auf den beiden Seiten der Hubsäule 1 unterschiedlichen Längen an nach unten gefördertem Antriebselement R auszugleichen, wird demnach das Umlenkrad 2 zu einer entsprechenden Drehbewegung veranlasst, was wiederum zu der gewünschten Bewegung des Armes 8 und des daran befindlichen Arbeitswerkzeugs 6 führt.

Um die Hubsäule 1 in der durch die Pfeile mit schwarzem Pfeilkopf bezeichneten Richtung nach oben zu bewegen, werden entsprechend die beiden Motoren M1, M2 so angetrieben, dass sie die jeweils zugehörigen Antriebsräder 4 bzw. 5 in dem mit den Pfeilen mit schwarzem Kopf bezeichneten Drehsinn mit gleicher Geschwindigkeit antreiben. Im vorliegenden Fall heißt das, dass der in Figur 1 rechte Motor M2 das Antriebsrad 5 im Gegenuhrzeigersinn antreibt, während der in Figur 1 linke Motor M1 das Antriebsrad 4 im Uhrzeigersinn antreibt. Auf diese Weise befördern die beiden Antriebsräder 4,5 das Antriebselement R von der bezüglich der Antriebsräder 4,5 gesehenen unteren Seite auf die bezüglich der Antriebsräder 4,5 gesehen obere Seite, wodurch die mit dem Antriebselement R über die Umlenkräder 2,3 in Wirkverbindung stehende Hubsäule 1 angehoben wird. Wie oben dargestellt wurde, wird auch hier das Umlenkrad 2 nicht angetrieben, falls die beiden Antriebsräder 4,5 das Antriebselement R mit gleicher Geschwindigkeit antreiben, während eine Drehbewegung des Umlenkrads 2 und somit eine begrenzte Bewegung des Arbeitswerkzeugs 6 erreicht werden kann, falls die Antriebsräder 4,5 das Antriebselement R mit unterschiedlicher Geschwindigkeit antreiben.

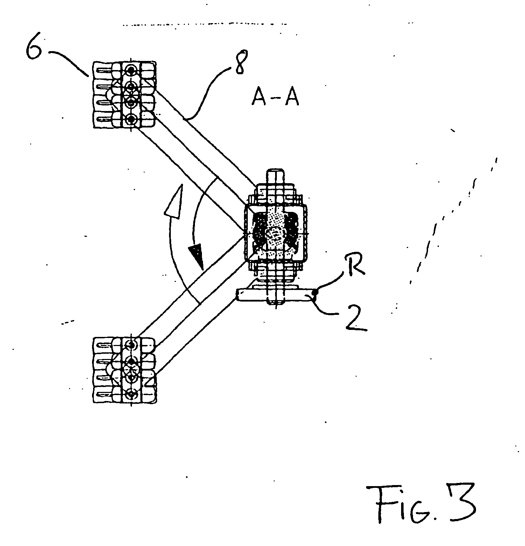

In den Figuren 2 und 3 wird die erste Ausführungsform der erfindungsgemäßen Vorrichtung zum Positionieren und Antreiben eines Arbeitswerkzeugs 6 beim Antreiben des Arbeitswerkzeugs 6 dargestellt. Erfindungsgemäß werden hierbei die beiden Motoren M1 und M2 so betrieben, dass die jeweils zugehörigen Antriebsräder 4 bzw. 5 das Antriebselement R in der gleichen Umlaufrichtung antreiben. Dies kann erfolgen, indem entweder die beiden Antriebsräder 4,5 entsprechend der durch die Pfeile mit dem weißen Pfeilkopf gekennzeichneten Richtung im Uhrzeigersinn, oder entsprechend der durch die Pfeile mit dem schwarzen Pfeilkopf gekennzeichneten Richtung im Gegenuhrzeigersinn angetrieben werden. In beiden Fällen läuft das Antriebselement R gleichmäßig um die Antriebsrollen 4,5 sowie die Umlenkräder 2,3,20 um und treibt hierbei insbesondere das am unteren Ende der Hubsäule 1 angeordnete Umlenkrad 2 an. In Figur 2 ist durch die entsprechenden Pfeile mit schwarzem bzw. weißem Pfeilkopf angegeben, in welcher Drehrichtung sich in der gegebenen Anordnung das Umlenkrad 2 jeweils dreht, wenn die Motoren M1,M2 die Antriebsräder 4,5 in der jeweiligen, mit den entsprechenden Pfeilen bezeichneten Richtung antreiben.

In der vorliegenden Ausführungsform wird die jeweilige Drehbewegung des Umlenkrads 2 über die Getriebevorrichtung 22 in eine entsprechende Drehbewegung des Armes 8 und des daran befindlichen Arbeitwerkzeugs 6 umgesetzt, wie aus Figur 3 ersichtlich ist. Hierbei sind beispielsweise durch entsprechendes Umschalten der Antriebsrichtungen der Motoren M1,M2 oszillierende Schwenkbewegungen des Armes 8 möglich. Allerdings kann bei gleich bleibender Antriebsrichtung der Motoren M1, M2 auch eine kontinuierliche Rotationsbewegung um eine feste Achse erzeugt werden, die dann beispielsweise für einen Bohrvorgang oder Ähnliches verwendet werden kann.

Unter der Voraussetzung, dass die beiden Motoren M1,M2 bzw. die zugehörigen Antriebsräder 4,5 das Antriebselement R mit gleicher Geschwindigkeit antreiben, ist gewährleistet, dass sich die Position der Hubsäule 1 beim Antreiben des Arbeitswerkzeugs 6 nicht verändert. Sollte während des Antreibens des Arbeitswerkzeugs 6 eine Änderung der Position der Hubsäule 1 in vertikaler Richtung erwünscht sein, so kann dies erreicht werden, indem die Motoren M1 und M2 so betrieben werden, dass die Antriebsräder 4,5 das Antriebselement R mit unterschiedlicher Geschwindigkeit antreiben.

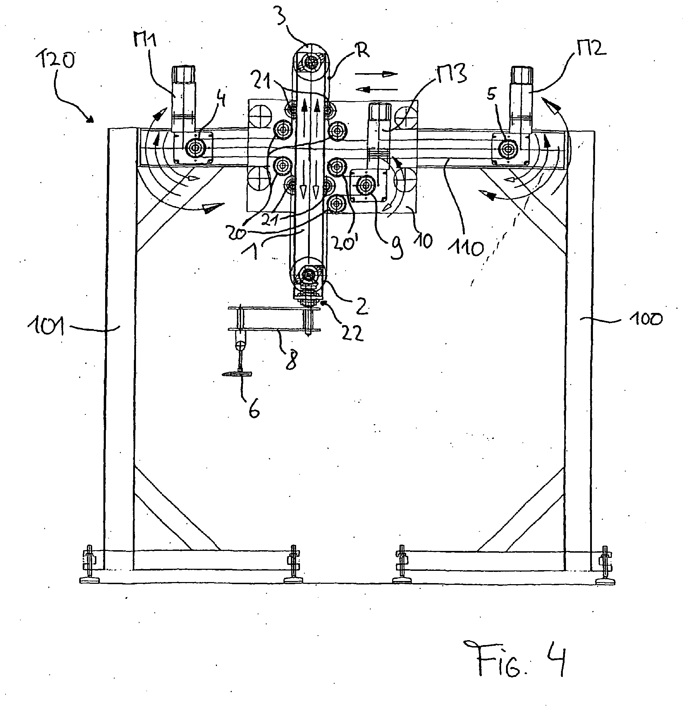

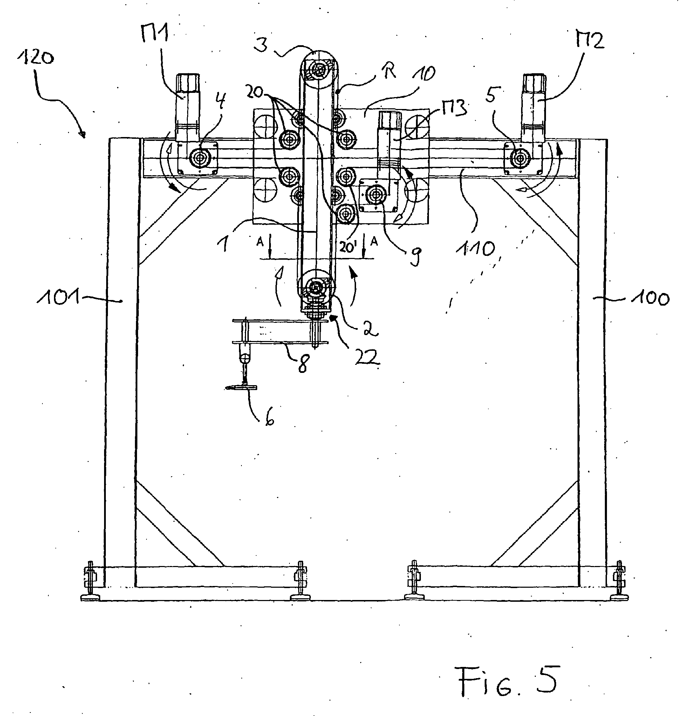

In den Figuren 4 und 5 ist eine zweite Ausführungsform der erfindungsgemäßen Vorrichtung zum Positionieren und Antreiben eines Arbeitswerkzeugs 6 in Form eines sogenannten Portalantriebs dargestellt, wobei das Arbeitswerkzeugs 6 bei dieser Ausführungsform in zwei unterschiedlichen Richtungen positioniert werden kann. Bei dieser Ausführungsform ist der erfindungsgemäße erste bewegliche Schlitten in Form einer Hubsäule 1 nicht wie in der in den Figuren,1 und 2 dargestellten Ausführungsform direkt, sondern mittelbar über einen zweiten beweglichen Schlitten 10 an dem Gestell 120 befestigt. Das Gestell 120 besteht im vorliegenden Fall aus zwei vertikal stehenden Seitenbauträgern 100,101, die durch einen horizontal verlaufenden Querträger 110 miteinander verbunden sind, und bildet folglich ein Portal.

Der zweite bewegliche Schlitten 10 ist auf dem Querträger 110 in horizontaler Richtung verschiebbar gelagert. Auf diesem Schlitten 10 ist wiederum in vertikaler Richtung beweglich die Hubsäule 1 gelagert, wobei sie in der vertikalen Richtung wieder durch Lagerrollen 21 geführt wird. Folglich ist eine Bewegung der Hubsäule 1 relativ zum Schlitten 10 in Richtung der Pfeile mit schwarzem Pfeilkopf oder in Richtung der Pfeile mit weißem Pfeilkopf möglich.

Weiterhin ist auf dem Schlitten 10 ein dritter Motor M3 angeordnet, der über das Antriebsrad 9 mit dem Antriebselement R antriebsverbunden ist. Die aus dem vorherigen Ausführungsbeispiel bekannten vier Umlenkräder 20 sind hier neben einem weiteren Umlenkrad 20' auf dem Schlitten 10 angeordnet. Die vertikal bewegliche Hubsäule 1 weist wiederum zwei mit dem Antriebselement R in Eingriff stehende Umlenkräder 2,3 auf. Die Motoren M1, M2 mit ihren zugehörigen Antriebsrädern 4,5 sind im vorliegenden Ausführungsbeispiel an dem Querträger 110 des Gestells 120 ortsfest angeordnet.

Wie in den Fig. 4 und 5 zu erkennen ist, beträgt der Umschlingungswinkel bei dem Antriebsrad 9 180° und bei dem rechten, unteren Umlenkrad 20' 180°, während er sich bei dem Umlenkrad 20 auf 90° beläuft. Das vorgenannte Antriebsrad 9 bzw. die vorgenannten Umlenkräder 20 und 20' sind derart angeordnet, dass sich zwischen dem rechten, unteren Umlenkrad 20 und dem Umlenkrad 20' eine Schlaufe des Antriebselements R bildet, die den Umschlingungswinkel von 180° an dem Antriebsrad 9 gewährleistet. Mit anderen Worten bedeutet dies, dass der Abstand der Außendurchmesser des rechten, unteren Umlenkrads 20 und des Umlenkrads 20' im Wesentlichen gleich dem Durchmesser des Antriebsrads 9 ist.

Auch bei dieser Ausführungsform weist das Antriebselement R die Form eines Zahnriemens auf und steht mit den Antriebsrädern 4,5,9 sowie den Umlenkrädern 2,3 in einem formschlüssigen Eingriff, wobei diese Bauteile wieder in Form von Zahnriemenscheiben ausgebildet sind. Die Räder 20 und 20' können als glatte Umlenkscheiben ausgebildet sein.

Figur 4 zeigt zunächst die Positionierung des Arbeitswerkzeugs 6 durch eine horizontale Bewegung des zweiten Schlittens 10 bzw. einer vertikalen Bewegung der Hubsäule 1. Obwohl eine Betriebsart der Motoren M1,M2,M3 möglich ist, bei dem gleichzeitig eine Bewegung des Arbeitswerkzeugs 6 in vertikaler sowie horizontaler Richtung erfolgt, wird zum einfacheren Verständnis im Folgenden vorwiegend getrennt auf eine horizontale Bewegung des Schlittens 10 und auf eine vertikale Bewegung der Hubsäule 1 eingegangen.

Entsprechend der ersten Ausführungsform werden zum vertikalen Bewegen der Hubsäule 1 die beiden am Gestell 120 angeordneten Motoren M1,M2 so betrieben, dass die zugehörigen Antriebsräder 4,5 das Antriebselement R in entgegengesetzten Umlaufrichtungen antreiben. Soll beispielsweise die Hubsäule 1 in der durch die Pfeile mit weißem Pfeilkopf bezeichneten Richtung nach unten bewegt werden, so werden die beiden Motoren M1,M2 so angetrieben, dass sie die jeweils zugehörigen Antriebsräder 4 bzw. 5 in dem mit den Pfeilen mit weißem Kopf bezeichneten Drehsinn antreiben. Im vorliegenden Fall heißt das, dass der in Figur 4 rechte Motor M2 das Antriebsrad 5 im Uhrzeigersinn antreibt, während der in Figur 4 linke Motor M1 das Antriebsrad 4 im Gegenuhrzeigersinn antreibt. Auf diese Weise befördern die beiden Antriebsräder 4,5 das Antriebselement R von der bezüglich der Antriebsräder 4,5 gesehenen oberen Seite auf die bezüglich der Antriebsräder 4,5 gesehen untere Seite, wodurch die mit dem Antriebselement R über die Umlenkräder 2,3 in Wirkverbindung stehende Hubsäule 1 abgesenkt wird. Bei einer gleichen Geschwindigkeit der Antriebsräder 4,5 wird auf beiden Seiten der Hubsäule die gleiche Länge an Antriebselement R nach unten befördert , so dass das Umlenkrolle 2 am unteren Ende der Hubsäule 1 bei diesem Vorgang durch das Antriebselement R nicht angetrieben wird, sondern in einer stabilen Position verbleibt. Dementsprechend bewegt sich auch der mit dem Umlenkrad 2 über die Getriebevorrichtung 22 verbundene Arm 8 und das daran befindliche Arbeitswerkzeug 6 während des Bewegungsvorgangs der Hubsäule 1 nicht.

Der auf dem Schlitten 10 angeordnete Motor M3 wird hierbei so betrieben, dass sein Antriebsrad 9 das Antriebselement R jeweils in der gleichen Umlaufrichtung und mit der gleichen Geschwindigkeit wie das Antriebsrad 5 des Motors M2 antreibt. Dies ist auch durch die entsprechenden Pfeile mit weißem bzw. schwarzem Pfeilkopf bei Motor M3 angedeutet. Auf diese Weise ist sichergestellt, dass sich die Länge des zwischen dem Antriebsrad 9 und dem Antriebsrad 5 befindlichen Abschnitts des Antriebselements R während des vertikalen Positionierens der Hubsäule 1 nicht ändern kann, und der Schlitten 10 somit in einer stabilen horizontalen Lage verbleibt. Wäre der Motor M3 nicht vorhanden, so könnte der bewegliche Schlitten 10 während des vertikalen Positionieren der Hubsäule 1 ohne größere Kraftanstrengung in horizontaler Richtung verschoben werden, da die Längen der oberhalb bzw. unterhalb der Antriebsräder 4,5 befindlichen Abschnitte des Antriebselements R unabhängig von der Position des horizontal beweglichen Schlittens 10 sind.

Um den Schlitten 10 und somit auch das an der auf dem Schlitten 10 angeordneten Hubsäule 1 befindliche Arbeitswerkzeug 6 in horizontaler Richtung, in Figur 4 durch die Pfeile mit horizontal schwarz-weiß gestreiftem Pfeilkopf und vertikal schwarz-weiß gestreiftem Pfeilkopf dargestellt, zu positionieren, werden die beiden an dem Gestell 120 angeordneten Motoren M1,M2 so betrieben, dass ihre jeweiligen Antriebsräder 4,5 das Antriebselements R in gleicher Umlaufrichtung antreiben. Durch Pfeile mit entsprechendem Pfeilkopf wird hierbei angegeben, wie der jeweilige Drehsinn der Antriebsräder 4,5 für die jeweilige horizontale Bewegung des Schlittens 10 ist. Der auf dem beweglichen Schlitten 10 angeordnete Motor M3 ist hierbei blockiert, d. h. dass sein Antriebsrad 9 keine Drehbewegung durchführen kann. Auf diese Weise wird durch den mittels der Antriebsräder 4,5 auf das Antriebselement R ausgeübten Antrieb eine Zugwirkung auf den beweglichen Schlitten 10 ausgeübt, die dazu führt, dass dieser auf dem Querträger 110 in horizontaler Richtung verschoben wird.

In Figur 5 wird die zweite Ausführungsform der erfindungsgemäßen Vorrichtung zum Positionieren und Antreiben eines Arbeitswerkzeugs 6 beim Antreiben des Arbeitswerkzeugs 6 dargestellt.

Hierzu werden die Motoren M1, M2 und M3 derart betrieben, dass die jeweiligen Antriebsräder 4,5,9 das Antriebselement R in gleicher Umlaufrichtung mit gleicher Geschwindigkeit antreiben, wie in Fig.5 durch die entsprechenden Pfeile mit schwarzem bzw. weißem Pfeilkopf dargestellt wird. Auf diese Weise wird erreicht, dass das Antriebselement R gleichmäßig umläuft und hierbei das Umlenkrad 2 und somit auch den über die Getriebevorrichtung 22 angekoppelten Arm 8 sowie das Arbeitswerkzeug 6 antreibt. Auch hier dient der dritte Motor M3 auf dem beweglichen Schlitten 10 dazu, den Schlitten beim Antreiben des Arbeitswerkzeugs 6 in einer stabilen horizontalen Position zu halten.

Indem die Motoren M1, M2und M3 derart betrieben werden, dass die zugehörigen Antriebsräder 4,5,9 das Antriebselement R mit unterschiedlichen Geschwindigkeiten antreiben, kann erreicht werden, dass eine gleichzeitige Positionierung des Arbeitswerkzeugs durch eine kombinierte Bewegung des beweglichen Schlittens 10 bzw. der Hubsäule 1 sowohl in vertikaler als auch in horizontaler Richtung erfolgt. Hierbei ist eine große Anzahl verschiedener Steuerungsmöglichkeiten der Motoren M1,M2,M3 gegeben, um das jeweils erwünschte Ergebnis zu erreichen.

### BEZUGSZEICHENLISTE

- M1,M2: Motoren am Gestell
- M3: Motor auf Schlitten 10
- R: Antriebselement
- 1: Hubsäule
- 2: Umlenkrolle/Umlenkrad
- 3: Umlenkrolle/Umlenkrad
- 4: Antriebsrad
- 5.: Antriebsrad
- 6: Arbeitswerkzeug
- 8: Arm
- 9: Antriebsrad
- 10: beweglicher Schlitten
- 20: Umlenkrollen/
Umlenkräder
- 20': Umlenkrolle/Umlenkrad
- 21: Lagerrollen
- 22: Getriebevorrichtung
- 100,101: Seitenteile
- 110: Querträger
- 120: Gestell

## Patentansprüche

1. Vorrichtung zum Positionieren und Antreiben eines Arbeitswerkzeuges (6), umfassend
ein Gestell (120),
einen an dem Gestell (120) in einer ersten Richtung beweglich angeordneten ersten Schlitten (1), wobei das Arbeitswerkzeug (6) an dem Schlitten (1) angeordnet ist,
wobei zwei an dem Gestell (120) befestigte Motoren (M1, M2) durch ein gemeinsames endlos umlaufendes Antriebselement (R) derart mit dem Arbeitswerkzeug (6) und dem ersten Schlitten (1) gekoppelt sind, dass mittels des Antriebselements (R) abhängig von den Antriebszuständen der jeweiligen Motoren (M1, M2) das Arbeitswerkzeug (6) entweder durch Verschieben des ersten Schlittens (1) in der ersten Richtung positionierbar oder in einer eingestellten Position bei feststehendem ersten Schlitten (1) antreibbar ist.

2. Vorrichtung zum Positionieren und Antreiben eines Arbeitswerkzeuges (6) nach Anspruch 1,
**dadurch gekennzeichnet, dass**
das Antriebselement (R) um wenigstens eine Umlenkrolle bzw. ein Umlenkrad (2,3) an dem ersten Schlitten (1) geführt ist.

3. Vorrichtung zum Positionieren und Antreiben eines Arbeitswerkzeuges (6) nach Anspruch 2,
**dadurch gekennzeichnet, dass**
das Antriebselement (R) um genau zwei, in der ersten Richtung beabstandete Umlenkrollen/Umlenkräder (2,3) an dem ersten Schlitten (1) geführt ist.

4. Vorrichtung zum Positionieren und Antreiben eines Arbeitswerkzeuges (6) nach einem der Ansprüche 2 oder 3,
**dadurch gekennzeichnet, dass**
das Arbeitswerkzeug (6) mit der/dem wenigstens einen Umlenkrolle/Umlenkrad (2,3) antriebsverbunden ist.

5. Vorrichtung zum Positionieren und Antreiben eines Arbeitswerkzeuges (6) nach Anspruch 4,
**dadurch gekennzeichnet, dass**
die Antriebsverbindung des Arbeitswerkzeugs (6) mit der/dem wenigstens einen Umlenkrolle/Umlenkrad (2,3) eine Getriebevorrichtung (22) umfasst.

6. Vorrichtung zum Positionieren und Antreiben eines Arbeitswerkzeuges (6) nach einem der vorangehenden Ansprüche,
**dadurch gekennzeichnet, dass**
die beiden Motoren (M1,M2) bezüglich der ersten Richtung auf verschiedenen Seiten des ersten Schlittens (1) angeordnet sind.

7. Vorrichtung zum Positionieren und Antreiben eines Arbeitswerkzeuges (6) nach einem der vorangehenden Ansprüche,
**dadurch gekennzeichnet, dass**
das Antriebselement (R) über Antriebsrollen bzw. Abtriebsräder (4,5) an die Motoren (M1, M2) angekoppelt ist.

8. Vorrichtung zum Positionieren und Antreiben eines Arbeitswerkzeuges (6) nach einem der vorangehenden Ansprüche,
**dadurch gekennzeichnet, dass**
jeweils zwischen den Antriebsrollen/Antriebsrädern (4,5) der Motoren (M1,M2) und den auf dem ersten Schlitten (1) angeordneten Umlenkrollen/Umlenkrädern (2,3) eine/ein an dem Gestell (120) befestigte/s Umlenkrolle/Umlenkrad (20) angeordnet ist.

9. Vorrichtung zum Positionieren und Antreiben eines Arbeitswerkzeuges (6) nach einem der vorangehenden Ansprüchen,
**dadurch gekennzeichnet, dass**
der erste Schlitten (1) mittels eines in einer zweiten Richtung beweglich an dem Gestell (120) angeordneten, zweiten Schlittens (10) an dem Gestell (120) gelagert ist und dass an dem zweiten Schlitten (10) ein dritter Motor (M3) angeordnet ist, der so mit dem Antriebselement (R) und den an dem Gestell (120) angeordneten Motoren (M1,M2) gekoppelt ist, dass mittels des Antriebselements (R) abhängig von den Antriebszuständen der jeweiligen Motoren (M1,M2,M3) das Arbeitswerkzeug (6) entweder durch Verschieben des ersten und/oder zweiten Schlittens (1,10) in der ersten und/oder zweiten Richtung positionierbar oder in einer eingestellten Position bei feststehendem ersten und zweiten Schlitten (1,10) antreibbar ist.

10. Vorrichtung zum Positionieren und Antreiben eines Arbeitswerkzeuges (6) nach Anspruch 9,
**dadurch gekennzeichnet, dass**
die erste Richtung und die zweite Richtung aufeinander senkrecht stehen.

11. Vorrichtung zum Positionieren und Antreiben eines Arbeitswerkzeuges (6) nach Anspruch 9 oder 10,
**dadurch gekennzeichnet, dass**
jeweils zwischen den Antriebsrollen/Antriebsrädern (4,5) der Motoren (M1 ,M2) und den auf dem ersten Schlitten (1) angeordneten Umlenkrollen/Umlenkrollen (2,3) wenigstens eine/ein an dem zweiten Schlitten(10) befestigte/s Umlenkrolle/Umlenkrad (20) angeordnet ist.

12. Vorrichtung zum Positionieren und Antreiben eines Arbeitswerkzeuges (6) nach einem der Ansprüche 9 bis 11,
**dadurch gekennzeichnet, dass**
zwischen dem/der Antriebsrad/Antriebsrolle (9) des an dem zweiten Schlitten (10) angeordneten Motors (M3) und den AntriebsrollenlAntriebsrädern (4,5) der Motoren (M1,M2) sowie den auf dem ersten Schlitten (1) angeordneten Umlenkrollen/Umlenkrollen (2,3) jeweils wenigstens eine/ein an dem zweiten Schlitten(10) befestigtels Umlenkrolle/Umlenkrad (20;20') angeordnet ist

13. Vorrichtung zum Positionieren und Antreiben eines Arbeitswerkzeuges (6) nach einem der vorangehenden Ansprüche,
**dadurch gekennzeichnet, dass**
es sich bei dem Gestell (120) um ein Portal handelt und der zweite Schlitten (10) an einem Querträger (110) des Portals angeordnet sind.

14. Verfahren zum Positionieren und Antreiben eines Arbeitswerkzeuges (6) mit einer Vorrichtung nach einem der Ansprüche 1 bis 8, bei dem
a) zum Einstellen der Position des Arbeitswerkzeuges (6) in der ersten Richtung die beiden an dem Gestell (120) befestigten Motoren (M1,M2) so betrieben werden, dass sie das Antriebselement (R) jeweils in gegenläufiger Umlaufrichtung antreiben und
b) zum Antreiben des Arbeitswerkzeugs (6) die beiden Motoren (M1,M2) so betrieben werden, dass sie das Antriebselement (R) in der gleichen Umlaufrichtung antreiben.

15. Verfahren zum Positionieren und Antreiben eines Arbeitswerkzeuges (6) mit einer Vorrichtung nach einem der Ansprüche 9 bis 12,
**dadurch gekennzeichnet, dass**
a) zum Einstellen der Position des Arbeitswerkzeuges (6) in der ersten Richtung die beiden an dem Gestell (120) befestigten Motoren (M1,M2) so betrieben werden, dass sie das Antriebselement (R) jeweils in gegenläufiger Umlaufrichtung antreiben und der dritte Motor (M3) auf dem zweiten Schlitten (10) das Antriebselement (R) synchron zu einem der beiden an dem Gestell (120) befestigten Motoren (M1,M2) antreibt,
b) zum Einstellen der Position des Arbeitswerkzeuges (6) in der zweiten Richtung die beiden an dem Gestell (120) befestigten Motoren (M1,M2) so betrieben werden, dass sie das Antriebselement (R) in gleicher Umlaufrichtung antreiben und der dritte Motor (M3) auf dem zweiten Schlitten (10) blockiert ist,
c) zum Betrieb des Arbeitswerkzeugs (6) die Motoren (M1,M2,M3) so betrieben werden, dass alle Motoren (M1,M2,M3) das Antriebselement (R) in der gleichen Umlaufrichtung antreiben.

16. Verfahren zum Positionieren und Antreiben eines Arbeitswerkzeuges (6) nach Anspruch 15,
**dadurch gekennzeichnet, dass**
der Betrieb des Arbeitswerkzeugs in Form einer linearen oder zirkularen Bewegung im Wesentlichen außerhalb der durch die erste und zweite Richtung aufgespannten Ebene erfolgt.

## Claims

1. Device for positioning and driving a work tool (6), comprising
a frame (120),
a first carriage (1) mounted on the frame (120) displaceable in a first direction, the work tool (6) being disposed on the carriage (1),
and two motors (M1, M2) mounted on the frame (120) are coupled with the work tool (6) and the first carriage (1) by means of a common, endlessly circulating drive element (R) so that the work tool (6) can either be positioned in the first direction by displacing the first carriage (1) or can be driven in a set position with the first carriage (1) stationary by means of the drive element (R) depending on the drive modes of the respective motors (M1, M2).

2. Device for positioning and driving a work tool (6) as claimed in claim 1,
**characterised in that**
the drive element (R) is guided around at least one pulley block/pulley wheel (2,3) on the first carriage (1) .

3. Device for positioning and driving a work tool (6) as claimed in claim 2,
**characterised in that**
the drive element (R) is guided around exactly two pulley blocks/pulley wheels (2,3) spaced apart from one another in the first direction on the first carriage (1).

4. Device for positioning and driving a work tool (6) as claimed in one of claims 2 or 3,
**characterised in that**
the work tool (6) is drivingly connected to the at least one pulley block/pulley wheel (2,3).

5. Device for positioning and driving a work tool (6) as claimed in claim 4,
**characterised in that**
the drive connection of the work tool (6) to the at least one pulley block/pulley wheel (2,3) comprises a gear mechanism (22).

6. Device for positioning and driving a work tool (6) as claimed in one of the preceding claims,
**characterised in that**
the two motors (M1, M2) are disposed on different sides of the first carriage (1) by reference to the first direction.

7. Device for positioning and driving a work tool (6) as claimed in one of the preceding claims,
**characterised in that**
the drive element (R) is coupled with the motors (M1, M2) by means of drive rollers or drive gears (4, 5).

8. Device for positioning and driving a work tool (6) as claimed in one of the preceding claims,
**characterised in that**
a pulley block/pulley wheel (20) mounted on the frame (120) is disposed respectively between the drive rollers/drive gears (4,5) of the motors (M1, M2) and the pulley blocks/pulley wheels (2,3) disposed on the first carriage (1).

9. Device for positioning and driving a work tool (6) as claimed in one of the preceding claims,
**characterised in that**
the first carriage (1) is mounted on the frame (120) by means of a second carriage (10) so as to be displaceable in a second direction on the frame (120), and a third motor (M3) is disposed on the second carriage (10) which is coupled with the drive element (R) and with the motors (M1, M2) disposed on the frame (120) so that the work tool (6) can either be positioned by displacing the first and/or second carriage (1, 10) in the first and/or second direction or can be driven in a set position with the first and second carriage (1,10) stationary depending on the drive modes of the respective motors (M1, M2, M3).

10. Device for positioning and driving a work tool (6) as claimed in claim 9,
**characterised in that**
the first direction and the second direction are perpendicular to one another.

11. Device for positioning and driving a work tool (6) as claimed in claim 9 or 10,
**characterised in that**
at least one pulley block/pulley wheel (20) mounted on the second carriage (10) is disposed respectively between the drive rollers/drive gears (4,5) of the motors (M1, M2) and the pulley blocks/pulley wheels (2,3) disposed on the first carriage (1).

12. Device for positioning and driving a work tool (6) as claimed in one of claims 9 to 11,
**characterised in that**
at least one pulley block/pulley wheel (20,20') mounted on the second carriage (10) is disposed respectively between the drive gear/drive roller (9) of the motor (M3) disposed on the second carriage (10) and the drive rollers/drive gears (4,5) of the motors (M1, M2) and between the pulley blocks/pulley rollers (2,3) disposed on the first carriage (1).

13. Device for positioning and driving a work tool (6) as claimed in one of the preceding claims,
**characterised in that**
the frame (120) is a gantry and the second carriage (10) is disposed on a cross-member (110) of the gantry.

14. Method of positioning and driving a work tool (6) by means of a device as claimed in one of claims 1 to 8, whereby
a) the two motors (M1,M2) mounted on the frame (120) are operated so that they each drive the drive element (R) respectively in the opposite direction of rotation in order to set the position of the work tool (6) in the first direction and
b) the two motors (M1,M2) are operated so that they drive the drive element (R) in the same direction of rotation in order to drive the work tool (6).

15. Method of positioning and driving a work tool (6) with a device as claimed in one of claims 9 to 12,
**characterised in that**
a) the two motors (M1,M2) mounted on the frame (120) are operated so that they each drive the drive element (R) in the opposite direction of rotation and the third motor (M3) on the second carriage (10) drives the drive element (R) synchronously with one of the two motors (M1, M2) mounted on the frame (120) in order to set the position of the work tool (6) in the first direction,
b) the two motors (M1, M2) mounted on the frame (120) are operated so that they drive the drive element (R) in the same direction of rotation and the third motor (M3) on the second carriage (10) is blocked in order to set the position of the work tool (6) in the second direction,
c) the motors (M1, M2, M3) are operated so that all the motors (M1, M2, M3) drive the drive element (R) in the same direction of rotation in order to operate the work tool (6).

16. Method of positioning and driving a work tool (6) as claimed in claim 15,
**characterised in that**
the work tool is operated on the basis of a linear or circular movement essentially outside the plane spanned by the first and second direction.

## Revendications

1. Dispositif de positionnement et d'entraînement d'un outil de travail (6) comprenant
un châssis (120),
un premier coulisseau (1) disposé de manière mobile dans une première position sur le châssis (120), l'outil d'entraînement (6) étant disposé sur le coulisseau (1),
deux moteurs (M1, M2) fixés au châssis (120) étant couplés à l'outil de travail (6) et au premier coulisseau (1) par un élément d'entraînement (R) commun en rotation continue, de telle sorte que l'outil de travail (6) peut être soit positionné dans la première direction en déplaçant le premier coulisseau (1) au moyen de l'élément d'entraînement (R) en fonction des états d'entraînement des moteurs respectifs (M1, M2) soit entraîné dans une position réglée dans le cas d'un premier coulisseau (1) fixe.

2. Dispositif de positionnement et d'entraînement d'un outil de travail (6) selon la revendication 1,
**caractérisé en ce que**,
l'élément d'entraînement (R) est conduit au premier coulisseau (1) autour d'au moins une poulie de renvoi et/ou une roue de renvoi (2, 3).

3. Dispositif de positionnement et d'entraînement d'un outil de travail (6) selon la revendication 2,
**caractérisé en ce que**,
l'élément d'entraînement (R) est conduit au premier coulisseau (1) autour d'exactement deux poulies de renvoi/roues de renvoi (2, 3) espacées dans la première direction.

4. Dispositif de positionnement et d'entraînement d'un outil de travail (6) selon l'une quelconque des revendications 2 ou 3,
**caractérisé en ce que**,
l'outil d'entraînement (6) avec l'au moins une poulie de renvoi/roue de renvoi (2, 3) est relié par entraînement.

5. Dispositif de positionnement et d'entraînement d'un outil de travail (6) selon la revendication 4,
**caractérisé en ce que**,
la liaison par entraînement de l'outil de travail (6) avec l'au moins une poulie de renvoi/roue de renvoi (2, 3) comprend un dispositif de transmission (22).

6. Dispositif de positionnement et d'entraînement d'un outil de travail (6) selon l'une quelconque des revendications précédentes,
**caractérisé en ce que**,
les deux moteurs (M1, M2) sont disposés de différents côtés du premier coulisseau (1) en ce qui concerne la première direction.

7. Dispositif de positionnement et d'entraînement d'un outil de travail (6) selon l'une quelconque des revendications précédentes,
**caractérisé en ce que**,
l'élément d'entraînement (R) est accouplé aux moteurs (M1, M2) par le biais de poulies de renvoi et/ou roues de renvoi (4, 5).

8. Dispositif de positionnement et d'entraînement d'un outil de travail (6) selon l'une quelconque des revendications précédentes,
**caractérisé en ce que**,
une poulie de renvoi/roue de renvoi (20) fixée au châssis (120) est disposée respectivement entre les poulies de renvoi/roues de renvoi (4, 5) des moteurs (M1, M2) et les poulies de renvoi/roues de renvoi (2, 3) disposées sur le premier coulisseau (1).

9. Dispositif de positionnement et d'entraînement d'un outil de travail (6) selon l'une quelconque des revendications précédentes,
**caractérisé en ce que**,
le premier coulisseau (1) est logé au niveau du châssis (120) au moyen d'un deuxième coulisseau (10) disposé de manière mobile sur le châssis (120) dans une deuxième position et **en ce que** un troisième moteur (M3) est disposé sur le deuxième coulisseau (10) qui est accouplé avec l'élément d'entraînement (R) et les moteurs (M1, M2) disposés sur le châssis (120) de telle sorte que l'outil de travail (6) peut être soit positionné en déplaçant le premier et/ou le deuxième coulisseau (1, 10) dans la première et/ou deuxième direction au moyen de l'élément d'entraînement (R) en fonction des états d'entraînement des moteurs respectifs (M1, M2, M3) soit entraîné dans une position réglée dans le cas d'un premier et deuxième coulisseau (1, 10) fixes.

10. Dispositif de positionnement et d'entraînement d'un outil de travail (6) selon la revendication 9,
**caractérisé en ce que**,
la première direction et la deuxième direction sont perpendiculaires.

11. Dispositif de positionnement et d'entraînement d'un outil de travail (6) selon la revendication 9 ou 10,
**caractérisé en ce que**,
au moins une poulie de renvoi/roue de renvoi (20) fixée au deuxième coulisseau (10) est disposé respectivement entre les poulies de renvoi/roues de renvoi (4, 5) des moteurs (M1, M2) et les poulies de renvoi/roues de renvoi (2, 3) disposées sur le premier coulisseau (1).

12. Dispositif de positionnement et d'entraînement d'un outil de travail (6) selon l'une quelconque des revendications 9 à 11,
**caractérisé en ce que**,
respectivement au moins une poulie de renvoi/roue de renvoi (20, 20') fixée au deuxième coulisseau (10) est disposée entre la roue d'entraînement/poulie d'entraînement (9) du moteur (M3) disposé sur le deuxième coulisseau (10) et les poulies de renvoi/roues de renvoi (4, 5) des moteurs (M1, M2) ainsi que les poulies de renvoi/roues de renvoi (2, 3) disposées sur le premier coulisseau (1).

13. Dispositif de positionnement et d'entraînement d'un outil de travail (6) selon l'une quelconque des revendications précédentes,
**caractérisé en ce que**,
le châssis (120) est un portique et le deuxième coulisseau (10) est disposé sur une traverse (110) du portique.

14. Procédé de positionnement et d'entraînement d'un outil de travail (6) muni d'un dispositif selon l'une quelconque des revendications 1 à 8, dans lequel
a) pour régler la position de l'outil de travail (6) dans la première position, les deux moteurs (M1, M2) fixés au châssis (120) fonctionnent de sorte à entraîner l'élément d'entraînement (R) respectivement dans un sens de rotation opposé et
b) pour entraîner l'outil de travail (6), les deux moteurs (M1, M2) fonctionnent de sorte à entraîner l'élément d'entraînement (R) dans le même sens de rotation.

15. Procédé de positionnement et d'entraînement d'un outil de travail (6) muni d'un dispositif selon l'une quelconque des revendications 9 à 12,
**caractérisé en ce que**,
a) pour régler la position de l'outil de travail (6) dans la première position, les deux moteurs (M1, M2) fixés au châssis (120) fonctionnent de sorte qu'ils entraînent l'élément d'entraînement (R) respectivement dans le sens de rotation opposé et que le troisième moteur (M3) sur le deuxième coulisseau (10) entraîne l'élément d'entraînement (R) de façon synchrone à un des deux moteurs (M1, M2) fixés au châssis (120),
b) pour régler la position de l'outil de travail (6) dans la deuxième direction, les deux moteurs (M1, M2) fixés au châssis (120) fonctionnent de sorte qu'ils entraînent l'élément d'entraînement (R) dans le même sens de rotation et que le troisième moteur (M3) est bloqué sur le deuxième coulisseau (10).
c) pour actionner l'outil de travail (6), les moteurs (M1, M2, M3) sont actionnés de telle sorte que tous les moteurs (M1, M2, M3) entraînent l'élément d'entraînement (R) dans le même sens de rotation.

16. Procédé de positionnement et d'entraînement d'un outil de travail (6) selon la revendication 15,
**caractérisé en ce que**,
l'actionnement de l'outil de travail sous forme d'un déplacement linéaire ou circulaire se produit essentiellement en dehors du plan s'étendant à travers la première et deuxième direction.
